# EUROPÄISCHE PATENTSCHRIFT

(11) **EP 4 178 838 B1**
(45) Veröffentlichungstag und Bekanntmachung des Hinweises auf die Patenterteilung: **09.09.2026**
(21) Anmeldenummer: 21743387.9
(22) Anmeldetag: 02.07.2021
(51) Int. Cl.: B60T 8/17

(54) **REGELUNGSVORRICHTUNG UND REGELUNGSVERFAHREN FÜR EIN GLEITSCHUTZSYSTEM**
CONTROL APPARATUS AND CONTROL METHOD FOR AN ANTI-SLIDE SYSTEM
APPAREIL DE COMMANDE ET PROCÉDÉ DE COMMANDE POUR UN SYSTÈME ANTIGLISSEMENT

(30) Priorität: 13.07.2020 DE 102020118360
(43) Veröffentlichungstag der Anmeldung: 17.05.2023
(73) Patentinhaber: KNORR-BREMSE Systeme für Schienenfahrzeuge GmbH, 80809 München (DE)
(72) Erfinder: FISCHER, Marcus, 80469 München (DE); RASEL, Thomas, 85635 Höhenkirchen-Siegertsbrunn (DE)
(86) Internationale Anmeldenummer: PCT/EP2021/068297
(87) Internationale Veröffentlichungsnummer: WO 2022/012966

(56) Entgegenhaltungen:
- EP-A2- 0 876 944
- EP-A2- 1 190 889
- DE-A1- 102006 057 813
- DE-A1- 102014 204 814
- DE-A1- 102015 116 862

## Beschreibung

Die Erfindung betrifft eine Regelungsvorrichtung für ein Gleitschutzsystem eines Schienenfahrzeugs. Das Gleitschutzsystem weist wenigstens eine ansteuerbare Aktoreinrichtung zur Einstellung einer Bremskraft bzw. eines Schlupfes einer Bremseinrichtung eines Rades/Radsatzes (im Folgenden steht die Verwendung von Rad der Verwendung von Radsatz gleich) und wenigstens eine Sensoreinrichtung zur Erfassung wenigstens einer Zustandsgröße (Druck, Geschwindigkeit, Bremskraft, Fahrzeugmasse etc.) auf. Des Weiteren weist die Regelungsvorrichtung eine Eingangseinrichtung zur Aufnahme der erfassten Zustandsgröße und eine Ausgangseinrichtung zur Ansteuerung der Aktoreinrichtung auf. Die Regelungsvorrichtung weist eine Schlupfregelungseinrichtung (bzw. Bremskraftregelungseinrichtung) auf, die zur Ermittlung eines Schlupfes/ der Bremskraft zwischen dem Rad und einer damit in Wirkverbindung stehenden Schiene aus den erfassten Zustandsgrößen eingerichtet ist. Darüber hinaus ist die Schlupfregelungseinrichtung zur Ansteuerung der Aktoreinrichtung mittels der Ausgangseinrichtung eingerichtet. Die Erfindung betrifft darüber hinaus ein Regelungsverfahren für eine derartige Regelungsvorrichtung.

Regelungsvorrichtungen für Gleitschutzsysteme stellen Aktoreinrichtungen von Bremseinrichtungen derart, dass insbesondere ein zu großer Schlupf zwischen Rädern und damit in Kontakt stehenden Schienen vermieden wird. Dadurch sollen Schäden bzw. erhöhter Verschleiß an Rad und Schiene vermieden und dabei dennoch möglichst kurze Bremswege auch bei unterschiedlichen, beispielsweise durch Umwelteinflüsse veränderten, Schienenbedingungen oder Adhäsionszuständen erreicht werden. Werden die Schlupfbereiche dauerhaft abweichend vom Standard (siehe z.B. UIC 541-05) gewählt, insbesondere der Minimalwert des Schlupfes zu klein bzw. der Maximalwert des Schlupfes zu groß, dann führt dies (bei zu großem Schlupf) aufgrund der erhöhten Reibung zu einem erhöhten Verschleiß an den Laufflächen der Räder sowie den Schienen. Dies bewirkt erhöhte Betriebskosten für Instandhaltungsarbeiten.

Industrienormen begrenzen daher die im Regelfall verfügbaren Schlupfbereiche (z.B. Merkblatt UIC 541-05), insbesondere den maximalen Schlupf. In bestimmten Situationen ist es notwendig, ein Schienenfahrzeug so schnell wie möglich anzuhalten. In diesem Fall kann die Begrenzung des Schlupfbereichs zu einer Verlängerung des Bremswegs führen (länger als theoretisch technisch möglich), was die Sicherheit reduziert.

Aus der DE 10 2006 057813 A1 ist ein Vorgeben verschiedener Schlüpfe bzw. Schlupfbereiche in Form einer saisonalen Umschaltung bekannt, da im Sommer und Winter der Schlupf auf der Schiene verschieden ist.

Die DE 10 2015 116862 A1 beschreibt einen Übergang zwischen einem Mikroschlupfbereich und einem Makroschlupfbereich, wobei der Mikroschlupfbereich einen niedrigeren zulässigen Schlupfbereich aufweist als der Makroschlupfbereich. Übergänge zwischen dem Makroschlupfbereich und dem Mikroschlupfbereich werden unter Berücksichtigung eines Vergleichs der bestimmten mittleren Bremskraft im Makroschlupfbereich mit der maximal im Mikroschlupfbereich verfügbaren Bremskraft veranlasst.

Weitere Ausführungen von Gleitschutzsystems sind zudem aus der EP 1 190 889 A2, der EP 0 876 944 A2 und der DE 10 2014 204814 A1 bekannt.

Vor diesem Hintergrund hat die vorliegende Erfindung die Aufgabe, die Sicherheit eines Gleitschutzsystems zu verbessern und dabei die Betriebskosten nicht unnötig zu erhöhen.

Die Aufgabe wird durch die Merkmale der Ansprüche 1 und 8 gelöst. Weitere vorteilhafte Ausgestaltungen sind Gegenstand der abhängigen Ansprüche.

Zur Lösung der Aufgabe wird eine Regelungsvorrichtung für ein Gleitschutzsystem eines Schienenfahrzeugs vorgeschlagen. Das Gleitschutzsystem weist wenigstens eine ansteuerbare Aktoreinrichtung zur Einstellung einer Bremskraft einer Bremseinrichtung eines Rades und wenigstens eine Sensoreinrichtung zur Erfassung wenigstens einer Zustandsgröße auf. Die Regelungsvorrichtung weist eine Schlupfregelungseinrichtung (z.B. durch Kraftregelung, indem sich das System den Bereich der größten Kraftübertragung sucht) auf, die zur Ermittlung eines Schlupfes zwischen dem Rad und einer damit in Wirkverbindung stehenden Schiene aus den erfassten Zustandsgrößen eingerichtet ist, wobei die Schlupfregelungseinrichtung darüber hinaus zur Ansteuerung der Aktoreinrichtung mittels der Ausgangseinrichtung eingerichtet ist. Die Regelungsvorrichtung weist eine Schlupfbegrenzungseinrichtung auf, die zur Vorgabe eines Schlupfbereiches/ maximalen Schlupfs für die Schlupfregelungseinrichtung eingerichtet ist. Es kann also entweder ein maximaler Schlupf oder ein Schlupfbereich vorgegeben werden (wenn der maximale Schlupf vorgegeben wird, ist sozusagen eine obere Grenze vorgegeben - wenn ein Schlupfbereich vorgegeben wird, werden eine untere sowie eine obere Grenze des Schlupfes vorgegeben). Die Schlupfbegrenzungseinrichtung weist wenigstens eine erste Betriebsart und eine zweite Betriebsart auf, wobei ein Wahlschalter mittels eines Betriebsartsignals einer Notbremsschleife umschaltbar ist. Der ersten Betriebsart ist ein erster maximaler Schlupf bzw. ein erster Schlupfbereich und der zweiten Betriebsart ein zweiter maximaler Schlupf bzw. ein zweiter Schlupfbereich zugeordnet.

Regelungsvorrichtungen für Gleitschutzsysteme stellen Aktoreinrichtungen von Bremseinrichtungen derart, dass insbesondere ein zu großer Schlupf zwischen Rädern und damit in Kontakt stehenden Schienen vermieden wird. Dadurch sollen Schäden bzw. erhöhter Verschleiß an Rad und Schiene vermieden und dabei dennoch möglichst kurze Bremswege auch bei unterschiedlichen, beispielsweise durch Umwelteinflüsse veränderten, Schienenbedingungen oder Adhäsionszuständen erreicht werden. Werden die Schlupfbereiche dauerhaft abweichend vom Standard (siehe z.B. UIC 541-05) gewählt, insbesondere der Minimalwert des Schlupfes zu klein bzw. der Maximalwert des Schlupfes zu groß, dann führt dies (z.B. bei zu großem Schlupf) aufgrund der erhöhten Reibung zu einem erhöhten Verschleiß an den Laufflächen der Räder sowie den Schienen. Dies bewirkt erhöhte Betriebskosten für Instandhaltungsarbeiten.

Die erfindungsgemäße Lösung hat den Vorteil, dass der maximale Schlupf bzw. Schlupfbereich an die jeweilige Betriebsart oder Betriebssituation der Bremse angepasst werden kann. Dadurch kann in Situationen, in denen dies notwendig ist, ein erhöhter Verschleiß in Kauf genommen werden, während sonst der Verschleiß reduziert wird.

Gemäß der Erfindung ist der erste maximale Schlupf bzw. Schlupfbereich ein von einer Norm vorgegebener maximaler Schlupf bzw. Schlupfbereich und der zweite Schlupfbereich ein vorab bestimmter und hinterlegter und dann von der Regelungsvorrichtung verwendeter maximaler Schlupf bzw. Schlupfbereich zum Bewirken einer erhöhten, optimalerweise der maximal verfügbaren Kraftübertragung zwischen Rad und Schiene. Der zweite maximale Schlupf bzw. Schlupfbereich ist beispielsweise fahrzeugabhängig, geschwindigkeitsabhängig und/oder reibkraftabhängig und ist experimentell und/oder simulativ bestimmt. Er kann also von mehreren Größen abhängig sein und ist dann als Kennfeld hinterlegt.

Es kann / können auch eine oder mehrere (beispielsweise durch Simulation bestimmte oder an experimentelle Daten gefittete) mathematische Formel(n) für die Bestimmung des zweiten maximalen Schlupfes bzw. zweiten Schlupfbereichs hinterlegt sein, und entsprechende Werte von Variablen, welche zur Berechnung des zweiten maximalen Schlupfes bzw. zweiten Schlupfbereichs nötig sind, könnten aus entsprechenden Eingängen eingelesen werden.

Somit liegt in der ersten Betriebsart die Priorität der Schlupfregelungseinrichtung darauf, einen möglichst geringen Verschleiß der Radlaufflächen/ der Schiene(n) zu erreichen und dementsprechend den maximalen Schlupf / Schlupfbereich zu begrenzen. In der zweiten Betriebsart liegt die Priorität der Schlupfregelungseinrichtung darauf, eine möglichst gute Bremswirkung zu erzielen, ohne auf den Verschleiß Rücksicht zu nehmen. Dementsprechend wird der maximale Schlupf / Schlupfbereich auf andere Weise begrenzt/ erweitert. Insbesondere kann in diesem Fall vorgesehen sein, dass die normgemäßen Maximalwerte für den Schlupf überschritten werden. Dies kann insbesondere Notbremsungen/ Schnellbremsungen effektiver machen und damit die Sicherheit erhöhen.

In einer weiteren vorteilhaften Ausführungsform der Erfindung weist die Schlupfbegrenzungseinrichtung eine dritte Betriebsart auf, der ein dritter maximaler Schlupf bzw. Schlupfbereich zugewiesen ist. Der dritte maximale Schlupf bzw.

Schlupfbereich wird zur Ansteuerung der Aktoreinrichtung für den Fall gewählt, dass die Bremseinrichtung / das Gleitschutzsystem bzw. ein beliebiges Teil der Bremsanlage wenigstens teilweise eine Fehlfunktion aufweist (sog. fail safe mode). Der dritte maximale Schlupf bzw. Schlupfbereich könnte beispielsweise der in der Norm festgelegte Schlupfbereich sein.

Dies hat den Vorteil, dass auf eine Fehlfunktion hin eine daran angepasste Bremswirkung einstellbar ist.

Zur Lösung der Aufgabe wird des Weiteren ein Regelungsverfahren für eine Regelungseinrichtung eines Gleitschutzsystems vorgeschlagen, wobei das Gleitschutzsystem wenigstens eine Aktoreinrichtung zur Einstellung einer Bremskraft einer Bremseinrichtung eines Rades und wenigstens eine Sensoreinrichtung zur Erfassung wenigstens einer Zustandsgröße aufweist. Das Verfahren weist die Schritte auf:
Erfassen eines Betriebsartsignals einer Notbremsschleife; Einstellen, aufgrund des Betriebsartsignals, wenigstens einer ersten oder zweiten Betriebsart; Festlegen, aufgrund der Betriebsart, des vorbestimmten Schlupfbereichs auf einen ersten oder einen zweiten maximalen Schlupf bzw. Schlupfbereich, Bestimmung optimaler Schlupf bzw. Schlupfbereich, Auswahl Minimum aus maximalem und optimalem Schlupf;
Regeln eines Ansteuerungswertes für die Aktoreinrichtung, um den Schlupf in einem vorbestimmten Schlupfbereich einzustellen.

Dieses erfindungsgemäße Verfahren hat den Vorteil, dass der maximale Schlupf / Schlupfbereich an die jeweilige Betriebsart oder Betriebssituation der Bremse angepasst werden kann. Dadurch kann in Situationen, in denen dies notwendig ist, ein erhöhter Verschleiß in Kauf genommen werden, während sonst der Verschleiß bei Erzielung kurzer Bremswege reduziert wird.

Gemäß der Erfindung umfasst das Regelungsverfahren des Weiteren die Schritte: Bestimmen des ersten maximalen. Schlupfs bzw. Schlupfbereichs anhand der Vorgaben einer Norm und Bestimmen des zweiten maximalen Schlupfs bzw. Schlupfbereichs derart, dass eine maximale Kraftübertragung zwischen Rad und Schiene bewirkt wird.

Somit liegt in der ersten Betriebsart die Priorität der Schlupfregelungseinrichtung darauf, einen kleinen Verschleiß der Radlaufflächen/Schienen zu erreichen und dementsprechend den Schlupfbereich zu begrenzen. In der zweiten Betriebsart liegt die Priorität der Schlupfregelungseinrichtung darauf, eine möglichst gute Bremswirkung zu erzielen, ohne auf den Verschleiß Rücksicht zu nehmen. Dementsprechend wird der maximale Schlupf / Schlupfbereich auf andere Weise begrenzt. Insbesondere kann in diesem Fall vorgesehen sein, dass die normgemäßen Maximalwerte für den Schlupf überschritten werden. Dies macht insbesondere Schnellbremsungen effektiver und erhöht dadurch die Sicherheit.

Vorzugsweise ist der zweite maximale Schlupf bzw. Schlupfbereich von mehreren Größen abhängig, beispielsweise fahrzeugabhängig, geschwindigkeitsabhängig und/oder reibkraftabhängig.

Der zweite maximale Schlupf bzw. Schlupfbereich kann dabei experimentell und/oder simulativ bestimmt sein und /oder als Kennfeld in der Regelungseinrichtung hinterlegt sein.

Somit können beispielsweise für verschiedene Geschwindigkeiten verschiedene Werte für den zweiten maximale Schlupf bzw. Schlupfbereich vorgegeben sein - was eine noch genauere bzw. optimiertere Schlupfregelung zulässt.

Weiter vorzugsweise ist in der Regelungsvorrichtung mindestens eine mathematische Formel für die Bestimmung des zweiten maximalen Schlupfes bzw. zweiten Schlupfbereichs hinterlegt, und entsprechende Werte von Variablen, welche zur Berechnung des zweiten maximalen Schlupfes bzw. zweiten Schlupfbereichs nötig sind, werden aus entsprechenden Eingängen eingelesen.

Weitere vorteilhafte Merkmale und Ausführungsformen der Erfindung sind aus den beigefügten Figuren ersichtlich, die Erfindungsformen der Erfindung lediglich schematisch zeigen. Es zeigen im Einzelnen:
Fig. 1 eine schematische Darstellung einer Bremseinrichtung sowie eines Gleitschutzsystems mit einer Regelungsvorrichtung gemäß einer Ausführungsform der vorliegenden Erfindung und
Fig. 2 ein Diagramm mit Zustandsgrößen und Schlupfbereichen gemäß einer Ausführungsform der vorliegenden Erfindung.
Fig. 3 ein Ablaufdiagramm des erfindungsgemäßen Verfahrens.

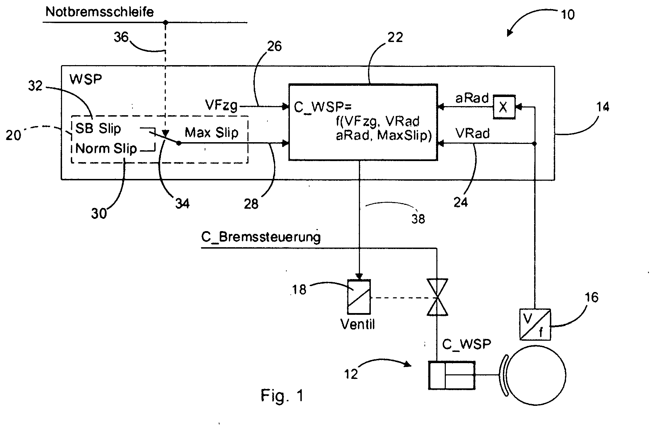

**Fig. 1** zeigt ein Gleitschutzsystem 10 für ein Schienenfahrzeug mit einer Bremseinrichtung 12. Das Gleitschutzsystem 10 weist eine Regelungsvorrichtung 14, eine durch einen Drehgeschwindigkeitssensor 16 gebildete Sensoreinrichtung, sowie eine Aktoreinrichtung 18 auf. Die Aktoreinrichtung 18 ist durch ein Ventil gebildet, das einen Druck in einem Bremszylinder der Bremseinrichtung 12 regelt. Die Aktoreinrichtung 18 ist von der Regelungsvorrichtung 14 mittels einer Ausgangseinrichtung ansteuerbar.

Die Regelungsvorrichtung 14 nimmt mittels Eingangseinrichtungen Zustandsgrößen und Messgrößen zur Verarbeitung auf. Beispielsweise übermittelt der Drehgeschwindigkeitssensor 16 eine Drehgeschwindigkeit des Rades 24 an die Regelungsvorrichtung 14, wobei der Wert der Drehgeschwindigkeit des Rades 24 an die Schlupfregelungseinrichtung 22 übergeben wird. Eine weitere, nicht gezeigte Sensoreinrichtung übermittelt eine Fahrgeschwindigkeit des Fahrzeugs 26 als Zustandsgröße an die Regelungsvorrichtung 14, wobei der Wert der Fahrgeschwindigkeit des Fahrzeugs 26 ebenfalls an die Schlupfregelungseinrichtung 22 übergeben wird.

Die Schlupfbegrenzungseinrichtung 20 übergibt einen maximalen Schlupfwert 28, in einer alternativen Ausführungsform in Form eines binären Informationssignals, an die Schlupfregelungseinrichtung 22 und definiert so einen Schlupfbereich, den die Schlupfregelungseinrichtung 22 bei der Ansteuerung der Aktoreinrichtung 18 verwenden darf. Der erlaubte Schlupfbereich liegt in diesem Fall zwischen dem Schlupf 0 (kein Schlupf) und dem maximalen Schlupf 28. Der erste Schlupfbereich 30 (Norm Slip) und der zweite Schlupfbereich 32 (SB Slip) werden gespeichert, in der vorliegenden Ausführung in der Schlupfbegrenzungseinrichtung 20. Mittels eines Wahlschalters 34 wird der Maximalwert 30a, 32a eines der gespeicherten Schlupfbereiche 30, 32 als maximaler Schlupf 28 ausgewählt. Die Untergrenze 0 des Schlupfbereichs ist in der Schlupfregelungseinrichtung 22 festgelegt und muss nicht mit übertragen werden.

Der Wahlschalter 34 wird mittels eines Betriebsartssignals 36, insbesondere von einer Notbremsschleife umgeschaltet.

Die Schlupfregelungseinrichtung 22 errechnet aus den Zustandsgrößen und 24, 26 und dem maximalen Schlupf 28 einen optimierten Schlupf, bei dem die beste Bremswirkung erzielt und der maximale Schlupf 28 nicht überschritten wird und bildet daraus ein Ansteuersignal 38, um die Aktoreinrichtung 18 zu stellen.

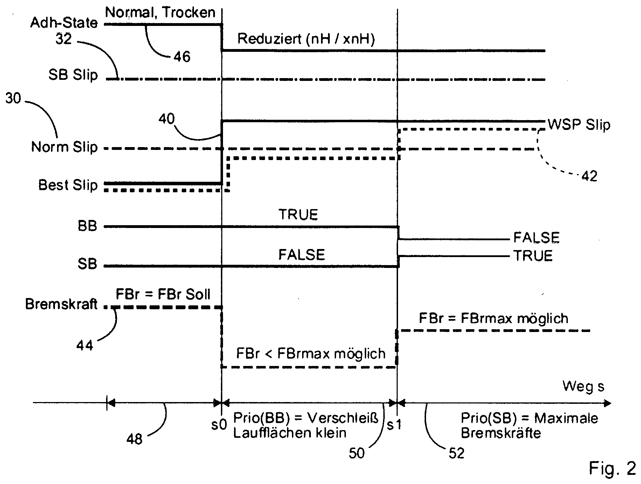

**Fig. 2** zeigt die Funktion der Regelungsvorrichtung beispielhaft. Das Diagramm zeigt für einen beispielhaft zurückgelegten Weg s jeweils abschnittsweise den ersten Schlupfbereich 30, den zweiten Schlupfbereich 32, einen von der Schlupfregelungseinrichtung 22 ermittelten besten Schlupf 40, sowie den im Rahmen des erlaubten Schlupfbereiches 30/32 optimierten Schlupf 42. Des Weiteren zeigt Fig. 2 eine damit erreichte Bremskraft 44 sowie einen von Umwelteinflüssen bestimmten Adhäsionszustand 46 des Kontakts zwischen Rad und Schiene.

Das Gleitschutzsystem 10 hat zwei Betriebsarten. Die erste Betriebsart BB ist eine Betriebsart als Betriebsbremse für den Normalbetrieb. Die zweite Betriebsart SB ist eine Betriebsart als Schnellbremse, insbesondere für Notbremsungen.

In einem ersten Wegabschnitt 48 ist der Adhäsionszustand 46 gut. Der Kontakt zwischen Rad und Schiene ist trocken. Als Betriebsart ist die Betriebsbremse BB eingestellt (BB = True, SB = False). Durch diese Betriebsart ist der erste Schlupfbereich 30 ausgewählt. Die Schlupfregelungseinrichtung 22 berechnet aufgrund einer gewünschten Bremskraft FBr Soll einen besten Schlupf 40. Der beste Schlupf 40 liegt in diesem Wegabschnitt unterhalb des Maximalwerts des ersten Schlupfbereichs 30 und bildet gleichzeitig den optimierten Schlupf 42 weswegen die Aktoreinrichtung 18 in diesem Fall nicht angesteuert wird.

In einem zweiten Wegabschnitt 50 ist der Adhäsionszustand 46 schlechter. Der Kontakt zwischen Rad und Schiene erlaubt nur eine reduzierte Kraftübertragung, beispielsweise verursacht durch Feuchtigkeit oder Laub. Als Betriebsart ist weiterhin die Betriebsbremse BB eingestellt. Der von der Schlupfregelungseinrichtung 22 berechnete beste Schlupf 40 liegt nun aufgrund der reduzierten Kraftübertragung zwischen Rad und Schiene über dem von dem ersten Schlupfbereich 30 bestimmten maximalen Schlupf. Der optimierte Schlupf 42 wird von der Schlupfregelungseinrichtung 22 also auf den maximal erlaubten Schlupf 30a des ersten Schlupfbereichs 30 festgelegt. Dadurch ist gleichzeitig die Bremskraft FBr geringer als eine maximal erreichbare Bremskraft FBrmax, da zum Erreichen der maximal erreichbaren Bremskraft FBrmax ein größerer Schlupf als von dem ersten Schlupfbereich 30 definiert nötig wäre.

Der erste Schlupfbereich 30 ist so definiert, dass der durch den Schlupf an Laufflächen der Räder bewirkte Verschleiß bei gleichzeitiger Verkürzung der Bremswege möglichst klein ist. Zu diesem Zweck kann der erste Schlupfbereich 30 anhand einer entsprechenden Industrienorm definiert sein.

Ein dritter Wegabschnitt 52 unterscheidet sich von dem zweiten Wegabschnitt 50 lediglich darin, dass als Betriebsart nunmehr die Schnellbremse (BB=False, SB=True) eingestellt ist. Dadurch ist der zweite Schlupfbereich 32 ausgewählt. Der von der Schlupfregelungseinrichtung 22 bestimmte beste Schlupf 40 liegt innerhalb des zweiten Schlupfbereichs 32 und bildet somit nunmehr den optimierten Schlupf 42, aufgrund dessen die Aktoreinrichtung 18 angesteuert wird. Dadurch wird eine gegenüber dem zweiten Wegabschnitt 50 bei gleichen äußeren Bedingungen deutlich höhere Bremskraft bewirkt. Allerdings ist dadurch auch der durch den Schlupf an den Laufflächen der Räder/ an der Schiene bewirkte Verschleiß erhöht. Die Betriebsart Schnellbremse wird daher nur gewählt, wenn es notwendig ist, dass das Schienenfahrzeug möglichst schnell anhält, beispielsweise bei einer Notbremsung.

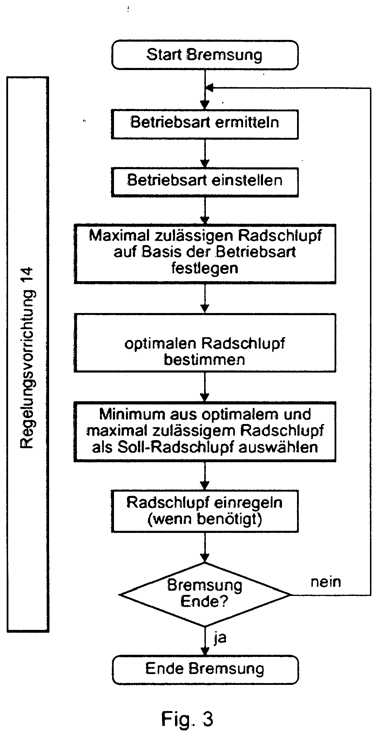

**Fig. 3** zeigt ein Ablaufdiagramm des Verfahrens, das die erfindungsgemäßen Schritte die durch die Regelungseinrichtung 14 durchgeführt werden, noch einmal veranschaulicht: Zunächst wird eine Betriebsart ermittelt. Anschließend wird die Betriebsart eingestellt, im vorliegenden Fall die erste oder die zweite Betriebsart wie vorstehend beschrieben. Anschließend wird der maximal zulässige Radschlupf auf Basis der festgelegten Betriebsart festgelegt. Nach der Bestimmung des optimalen Schlupfes erfolgt das Auswählen des Minimum aus den beiden Schlupfwerten (maximal zulässiger Radschlupf und Soll-Radschlupf). Dieser wird dann eingeregelt (wenn nötig) und das Verfahren zyklisch wiederholt.

Folgende weitere erfindungsgemäße Ausführungsformen sind denkbar.

Die Regelungsvorrichtung 14 kann beispielsweise als digitaler Rechner ausgeführt sein, es sind aber auch andere Ausgestaltungen, beispielsweise als Analogrechner, denkbar.

Sensoreinrichtungen, insbesondere der Drehgeschwindigkeitssensor 16, können die gemessenen Zustandsgrößen beispielsweise über digitale Schnittstellen bereitstellen. In einer weiteren alternativen Ausführungsform stellen die Sensoreinrichtungen ihre gemessenen Zustandsgrößen analog bereit. In diesem Fall weist die Regelungsvorrichtung 14 entsprechende Umsetzeinrichtungen, beispielsweise A/D-Wandler, auf.

Die Aktoreinrichtung 18 kann beispielsweise eine digitale Eingangseinrichtung, eine Signalverarbeitungseinrichtung und/oder einen Signalverstärker aufweisen, um an einen digitalen Ausgang der Regelungsvorrichtung 14 anschließbar zu sein.

In einer weiteren alternativen Ausführungsform weist die Schlupfbegrenzungseinrichtung 20 weitere Betriebsarten auf. So kann beispielsweise eine eingeschränkte Betriebsart (degraded mode) für den Fall vorgesehen sein, dass Teile der Bremssteuerung oder Teile der Bremsaktorik ausgefallen sind. In diesem Fall kann beispielsweise vorgesehen sein, dass immer die höchste Bremskraft, also der Schlupfbereich sehr groß gewählt wird.

Zur weiteren Erhöhung der Sicherheit wäre es in alternativen Ausführungsformen möglich, beispielsweise für unterschiedliche Betriebsarten unterschiedliche Regelungsvorrichtungen 14 vorzusehen, die jeweils bei Vorliegen einer Betriebsart aktiviert werden. Weiter beispielsweise könnten die Regelungsvorrichtungen 14 auch mit Prioritäten versehen werden, so dass eine höher priorisierte Regelungsvorrichtung 14 die Ansteuerung der Aktoreinrichtung 18 durch eine niedriger priorisierte Regelungsvorrichtung 14 überschreiben kann.

Die vorliegende Erfindung erlaubt es also, trotz weiterhin niedriger Instandhaltungskosten auf Notsituationen zu reagieren und somit die Sicherheit des Schienenfahrzeugs zu erhöhen.

In weiteren Ausführungsformen der Erfindung können die Schlupfbegrenzungseinrichtung 20 sowie die Schlupfregelungseinrichtung 22 in mindestens zwei separaten Geräten ausgeführt oder aber in einem Gerät integriert sein.

In weiteren Ausführungsformen können die Schlupfbegrenzungseinrichtung 20 sowie die Schlupfregelungseinrichtung 22 in unterschiedlicher Sicherheitsintegrität ausgeführt sein.

Das Betriebsartsignal 36 kann weiterhin als eines oder mehrere Signale ausgeführt sein. Dabei kann es sich um pneumatische (z.B. Hauptluftleitung) und/oder binäre elektrische (z.B. Notbremsschleife) und/oder elektronische Signale (z.B. Bus-Signale) handeln.

Das Signal maximal erlaubter Schlupf 28 kann als mindestens ein binäres elektrisches und/oder als mindestens ein elektronisches Signal ausgeführt sein. Abhängig hiervon und der dadurch übertragbaren Information können die Werte des ersten Schlupfbereichs 30 und/oder des zweiten Schlupfbereichs 32 (bzw. ersten maximalen Schlupfs 30a oder zweiten maximalen Schlupfs 32a) in der Schlupfbegrenzungseinrichtung 20 und/oder in der Schlupfregelungseinrichtung 22 hinterlegt sein (bei letzter Variante reduziert sich der Inhalt des maximal erlaubter Schlupf Signals auf "Beschränkung aktiv" bzw. "Beschränkung nicht aktiv").

Der erste und zweite Schlupfbereich 30, 32 können sowohl als Maximalwerte 30a, 32a und/oder als nach oben und/oder unten begrenzte Bereiche ausgeführt sein.

### BEZUGSZEICHENLISTE

- 10: Gleitschutzsystem
- 12: Bremseinrichtung
- 14: Regelungsvorrichtung
- 16: Drehgeschwindigkeitssensor
- 18: Aktoreinrichtung
- 20: Schlupfbegrenzungseinrichtung
- 22: Schlupfregelungseinrichtung
- 24: Drehgeschwindigkeit des Rades (Zustandsgröße)
- 26: Fahrgeschwindigkeit des Fahrzeugs (Zustandsgröße)
- 28: maximal erlaubter Schlupf
- 30: erster Schlupfbereich
- 30a: maximaler erster Schlupf
- 32: zweiter Schlupfbereich
- 32a: maximaler zweiter Schlupf
- 34: Wahlschalter
- 36: Betriebsartsignal
- 38: Ansteuersignal
- 40: bester Schlupf
- 42: optimierter Schlupf (eingestellt)
- 44: Bremskraft
- 46: Adhäsionszustand
- 48: erster Wegabschnitt
- 50: zweiter Wegabschnitt
- 52: dritter Wegabschnitt

## Patentansprüche

1. Regelungsvorrichtung (14) für ein Gleitschutzsystem (10) eines Schienenfahrzeugs, wobei das Gleitschutzsystem (10) wenigstens eine ansteuerbare Aktoreinrichtung (18) zur Einstellung einer Bremskraft einer Bremseinrichtung (12) eines Rades und wenigstens eine Sensoreinrichtung (16) zur Erfassung wenigstens einer Zustandsgröße (24, 26) aufweist, wobei die Regelungsvorrichtung (14) eine Eingangseinrichtung zur Aufnahme der erfassten Zustandsgröße (24, 26) und eine Ausgangseinrichtung zur Ansteuerung der Aktoreinrichtung (18) aufweist, wobei die Regelungsvorrichtung (14) eine Schlupfregelungseinrichtung (22) aufweist, die zur Ermittlung und Regelung eines Schlupfes zwischen wenigstens einem Rad und einer damit in Wirkverbindung stehenden Schiene aus den erfassten Zustandsgrößen (24, 26) eingerichtet ist, wobei die Schlupfregelungseinrichtung (22) zur Ansteuerung der Aktoreinrichtung (18) mittels der Ausgangseinrichtung eingerichtet ist, **dadurch gekennzeichnet, dass** die Regelungsvorrichtung (14) eine Schlupfbegrenzungseinrichtung (20) aufweist, die zur Vorgabe eines maximalen Schlupfs (30a, 32a) bzw. Schlupfbereiches (30, 32) für die Schlupfregelungseinrichtung (22) eingerichtet ist, wobei die Schlupfbegrenzungseinrichtung (20) wenigstens eine erste Betriebsart und eine zweite Betriebsart aufweist, wobei ein Wahlschalter (34) mittels mindestens eines Betriebsartsignals (36) einer Notbremsschleife umschaltbar ist , wobei der ersten Betriebsart ein erster maximaler Schlupf (30a) bzw. Schlupfbereich (30) und der zweiten Betriebsart ein zweiter maximaler Schlupf (32a) bzw. Schlupfbereich (32) zugeordnet ist, wobei mittels des Wahlschalters (34) der Maximalwert (30a, 32a) eines der gespeicherten Schlupfbereiche (30, 32) als maximaler Schlupf (28) auswählbar ist,, wobei der erste maximale Schlupf (30a) bzw. Schlupfbereich (30) ein hinsichtlich Verschleiß und Bremsweg optimierter maximaler Schlupf (30a) bzw. Schlupfbereich (30) ist und dass der zweite maximale Schlupf (32a) bzw. Schlupfbereich (32) ein vorab bestimmter und hinterlegter und von der Regelungsvorrichtung (14) dann verwendeter maximaler Schlupf bzw. Schlupfbereich zum Bewirken einer maximal verfügbaren und/oder optimierten Kraftübertragung zwischen Rad und Schiene ist.

2. Regelungsvorrichtung gemäß Anspruch 1, **dadurch gekennzeichnet, dass** der der zweite maximale Schlupf (32a) bzw. Schlupfbereich (32) fahrzeugabhängig, geschwindigkeitsabhängig und/oder reibkraftabhängig ist und experimentell und/oder simulativ bestimmt ist,
wobei der zweite maximale Schlupf (32a) bzw. Schlupfbereich (32) vorzugsweise von mehreren Größen abhängig ist,
wobei optional mindestens eine mathematische Formel für die Bestimmung des zweiten maximalen Schlupfes (32a) bzw. zweiten Schlupfbereichs (32) hinterlegt ist, und entsprechende Werte von Variablen, welche zur Berechnung des zweiten maximalen Schlupfes (32a) bzw. zweiten Schlupfbereichs (32) nötig sind, aus entsprechenden Eingängen eingelesen werden.

3. Regelungsvorrichtung gemäß einem der Ansprüche 1 oder 2, **dadurch gekennzeichnet, dass** die Schlupfbegrenzungseinrichtung (20) eine dritte Betriebsart aufweist, der ein dritter maximaler Schlupf bzw. Schlupfbereich zugewiesen ist, wobei der dritte maximale Schlupf bzw. Schlupfbereich zur Ansteuerung der Aktoreinrichtung (18) für den Fall gewählt ist, dass das Gleitschutzsystem und/oder die Bremseinrichtung (12) wenigstens teilweise eine Fehlfunktion aufweist.

4. Regelungsvorrichtung gemäß einem der vorhergehenden Ansprüche, **dadurch gekennzeichnet, dass** die Schlupfbegrenzungseinrichtung (20) sowie die Schlupfregelungseinrichtung (22) in mindestens zwei separaten Geräten ausgeführt ist.

5. Regelungsvorrichtung gemäß einem der vorhergehenden Ansprüche, **dadurch gekennzeichnet, dass** die Schlupfbegrenzungseinrichtung (20) sowie die Schlupfregelungseinrichtung (22) in unterschiedlicher Sicherheitsintegrität ausgeführt sind.

6. Regelungsvorrichtung gemäß einem der vorhergehenden Ansprüche, **dadurch gekennzeichnet, dass** das Betriebsartsignal (36) als eines oder mehrere Signale ausgeführt ist, wobei es sich um pneumatische und/oder binäre elektrische und/oder elektronische Signale handelt.

7. Regelungsvorrichtung gemäß einem der vorhergehenden Ansprüche, **dadurch gekennzeichnet, dass** ein Signal maximal erlaubter Schlupf (28) als mindestens ein binäres elektrisches und/oder als mindestens ein elektronisches Signal ausgeführt ist.

8. Regelungsverfahren für eine Regelungseinrichtung (14) eines Gleitschutzsystems (10) eines Schienenfahrzeugs, wobei das Gleitschutzsystem (10) wenigstens eine Aktoreinrichtung (18) zur Einstellung einer Bremskraft einer Bremseinrichtung (12) wenigstens eines Rades und wenigstens eine Sensoreinrichtung (16) zur Erfassung wenigstens einer Zustandsgröße (24, 26) aufweist, mit den Schritten: Erfassen eines Betriebsartsignals (36); Einstellen, aufgrund des Betriebsartsignals (36) einer Notbremsschleife, wenigstens einer ersten oder zweiten Betriebsart; Festlegen, aufgrund der Betriebsart, des vorbestimmten Schlupfbereichs auf einen ersten oder einen zweiten maximalen Schlupf (30a, 32a) bzw. Schlupfbereich (30, 32); Bestimmung optimaler Schlupf bzw. Schlupfbereich, Auswahl Minimum aus maximalem und optimalem Schlupf, Regeln eines Ansteuerungswertes für die Aktoreinrichtung (18), um den Schlupf in einem vorbestimmten Schlupfbereich einzustellen, wobei der erste Schlupfbereich (30) anhand der Vorgaben vom Verschleiß und Bremsweg optimierten Bereich ausgewählt wird; und der zweite maximale Schlupfs (30a) bzw. Schlupfbereich (32) derart ausgewählt wird, dass eine maximal verfügbare Kraftübertragung zwischen Rad und Schiene bewirkt wird, wobei der zweite maximale Schlupf (30a) bzw. Schlupfbereich (32) ein vorab bestimmter und hinterlegter und von der Regelungsvorrichtung (14) dann verwendeter maximaler Schlupf bzw. Schlupfbereich ist.

9. Verfahren gemäß Anspruch 8, wobei der zweite maximale Schlupf (32a) bzw. Schlupfbereich (32) von mehreren Größen abhängig ist und beispielsweise fahrzeugabhängig, geschwindigkeitsabhängig und/oder reibkraftabhängig ist,
und wobei der zweite maximale Schlupf (32a) bzw. Schlupfbereich (32) vorzugsweise experimentell und/oder simulativ bestimmt ist und /oder als Kennfeld in der Regelungseinrichtung (14) hinterlegt ist.

10. Verfahren gemäß Anspruch 8 oder 9,
wobei in der Regelungsvorrichtung (14) mindestens eine mathematische Formel für die Bestimmung des zweiten maximalen Schlupfes (32a) bzw. zweiten Schlupfbereichs (32) hinterlegt ist, und entsprechende Werte von Variablen, welche zur Berechnung des zweiten maximalen Schlupfes (32a) bzw. zweiten Schlupfbereichs (32) nötig sind, aus entsprechenden Eingängen eingelesen werden.

## Claims

1. A control apparatus (14) for an anti-slide system (10) of a rail vehicle, wherein the anti-slide system (10) has at least one activatable actuator device (18) for setting a braking force of a braking device (12) of a wheel and at least one sensor device (16) for detecting at least one state variable (24, 26), wherein the control apparatus (14) has an input device for recording the detected state variable (24, 26) and an output device for activating the actuator device (18), wherein the control apparatus (14) has a slip control device (22), which is configured to ascertain and control a slip between at least one wheel and a rail operationally connected thereto from the detected state variables (24, 26), wherein the slip control device (22) is configured to activate the actuator device (18) by means of the output device, **characterized in that** the control apparatus (14) has a slip limiting device (20), which is configured to specify a maximum slip (30a, 32a) or slip range (30, 32) for the slip control device (22), wherein the slip limiting device (20) has at least one first operating mode and one second operating modes, wherein a selector switch (34) can be switched by means of at least one operating mode signal (36) of an emergency braking loop, wherein a first maximum slip (30a) or slip range (30) is assigned to the first operating mode and a second maximum slip (32a) or slip range (32) is assigned to the second operating mode, wherein using the selector switch (34), the maximum value (30a, 32a) of one of the stored slip ranges (30, 32) can be selected as the maximum slip (28), wherein the first maximum slip (30a) or slip range (30) is a maximum slip (30a) or slip range (30) optimized with respect to wear and/or braking distance and **in that** the second maximum slip (32a) or slip range (32) is a predetermined and stored maximum slip or slip range, which is then used by the control apparatus (14) to effect a maximum available and/or optimized force transmission between wheel and rail.

2. The control apparatus as claimed in claim 1, **characterized in that** the second maximum slip (32a) or slip range (32) is vehicle-dependent, velocity-dependent, and/or friction force-dependent and is determined experimentally and/or by simulation,
wherein the second maximum slip (32a) or slip range (32) is preferably dependent on multiple variables,
wherein optionally at least one mathematical formula is stored for the determination of the second maximum slip (32a) or slip range (32), and corresponding values of variables, which are necessary for calculating the second maximum slip (32a) or . second slip range (32), are read in from corresponding inputs.

3. The control apparatus as claimed in any one of claims 1 or 2, **characterized in that** the slip limiting device (20) has a third operating mode, to which a third maximum slip or slip range is assigned, wherein the third maximum slip or slip range is selected for activating the actuator device (18) for the case in which the anti-slide system and/or the braking device (12) has at least a partial malfunction.

4. The control apparatus as claimed in any one of the preceding claims, **characterized in that** the slip limiting device (20) and the slip control device (22) are embodied in at least two separate devices.

5. The control apparatus as claimed in any one of the preceding claims, **characterized in that** the slip limiting device (20) and the slip control device (22) are configured to have different safety integrities.

6. The control apparatus as claimed in any one of the preceding claims, **characterized in that** the operating mode signal (36) is in the form of one or more signals, wherein these are pneumatic and/or binary electrical and/or electronic signals.

7. The control apparatus as claimed in any one of the preceding claims, **characterized in that** a signal of maximum permitted slip (28) is in the form of at least one binary electrical signal and/or at least one electronic signal.

8. A control method for a control device (14) of an anti-slide system (10) of a rail vehicle, wherein the anti-slide system (10) has at least one actuator device (18) for setting a braking force of a braking device (12) of at least one wheel and at least one sensor device (16) for detecting at least one state variable (24, 26), having the steps: detecting an operating mode signal (36); setting, on the basis of the operating mode signal (36) of an emergency braking loop, at least one first or second operating mode; defining, on the basis of the operating mode, the predetermined slip range at a first or second maximum slip (30a, 32a) or slip range (30, 32); determining optimum slip or slip range, selecting the minimum of the maximum and optimum slip, regulating an activation value for the actuator device (18) in order to set the slip in a predetermined slip range, wherein the first slip range (30) is selected on the basis of the specifications of the range optimized by the wear and braking distance; and the second maximum slip (30a) or slip range (32) is selected in such a way that a maximum available force transmission is effected between wheel and rail, wherein the second maximum slip (30a) or slip range (32) is a predetermined and stored maximum slip or slip range then used by the control apparatus (14).

9. The method as claimed in claim 8, wherein the second maximum slip (32a) or slip range (32) is dependent on multiple variables and is, for example, vehicle-dependent, velocity-dependent, and/or friction force-dependent, and wherein the second maximum slip (32a) or slip range (32) is preferably determined experimentally and/or by simulation and/or is stored as a characteristic map in the control apparatus (14).

10. The method as claimed in claim 8 or 9,
wherein at least one mathematical formula for the determination of the second maximum slip (32a) or second slip range (32) is stored in the control apparatus (14), and corresponding values of variables, which are necessary for calculating the second maximum slip (32a) or second slip range (32), are read in from corresponding inputs.

## Revendications

1. Dispositif de commande (14) pour un système antiglissement (10) d'un véhicule ferroviaire, dans lequel le système antiglissement (10) présente au moins un dispositif actionneur (18) actionnable pour le réglage d'une force de freinage d'un dispositif de freinage (12) d'une roue et au moins un dispositif de capteur (16) pour détecter au moins une grandeur d'état (24, 26), dans lequel le dispositif de commande (14) présente un dispositif d'entrée pour enregistrer la grandeur d'état (24, 26) détectée et un dispositif de sortie pour actionner le dispositif actionneur (18), dans lequel le dispositif de commande (14) présente un dispositif de commande de glissement (22) qui est conçu pour déterminer et commander un glissement entre au moins une roue et un rail en liaison active avec celle-ci à partir des grandeurs d'état (24, 26) détectées, dans lequel le dispositif de commande de glissement (22) est conçu pour actionner le dispositif actionneur (18) au moyen du dispositif de sortie, **caractérisé en ce que** le dispositif de commande (14) présente un dispositif de limitation de glissement (20) qui est conçu pour spécifier un glissement (30a, 32a) ou une plage de glissement (30, 32) maximal pour le dispositif de commande de glissement (22), dans lequel le dispositif de limitation de glissement (20) présente au moins un premier mode de fonctionnement et un second mode de fonctionnement, dans lequel un sélecteur (34) peut être commuté au moyen d'au moins un signal de mode de fonctionnement (36) d'une boucle de freinage d'urgence, dans lequel un premier glissement (30a) ou une première plage de glissement (30) maximal est attribué au premier mode de fonctionnement et un second glissement (32a) ou une seconde plage de glissement (32) maximal est attribué au second mode de fonctionnement, dans lequel la valeur maximale (30a, 32a) d'une des plages de glissement (30, 32) enregistrées peut être sélectionnée comme glissement maximal (28) au moyen du sélecteur (34), dans lequel le premier glissement (30a) ou la première plage de glissement (30) maximal est un glissement (30a) ou une plage de glissement (30) maximal optimisé par rapport à l'usure et à la course de freinage et **en ce que** le second glissement (32a) ou la seconde plage de glissement (32) maximal est un glissement ou une plage de glissement maximal déterminé au préalable et enregistré et utilisé alors par le dispositif de commande (14) pour provoquer une transmission de force disponible au maximum et/ou optimisée entre la roue et le rail.

2. Dispositif de commande selon la revendication 1, **caractérisé en ce que** le second glissement maximal (32a) ou la seconde plage de plage de glissement (32) dépend du véhicule, de la vitesse et/ou de la force de frottement et est déterminée par expérimentation et/ou simulation,
dans lequel le second glissement (32a) ou la seconde plage de glissement (32) maximale dépend de préférence de plusieurs grandeurs,
dans lequel éventuellement au moins une formule mathématique est enregistrée pour la détermination du second glissement (32a) maximal ou de la seconde plage de glissement (32), et des valeurs correspondantes de variables qui sont nécessaires au calcul du second glissement (32a) maximal ou de la seconde plage de glissement (32), sont lues à partir des entrées correspondantes.

3. Dispositif de commande selon l'une quelconque des revendications 1 ou 2, **caractérisé en ce que** le dispositif de limitation de glissement (20) présente un troisième mode de fonctionnement auquel est attribué un troisième glissement ou une troisième plage de glissement maximal, dans lequel le troisième glissement ou la troisième plage de glissement maximal est choisie pour activer le dispositif actionneur (18) pour le cas où le système antiglissement et/ou le dispositif de freinage (12) présente au moins partiellement un dysfonctionnement.

4. Dispositif de commande selon l'une quelconque des revendications précédentes, **caractérisé en ce que** le dispositif de limitation de glissement (20) ainsi que le dispositif de commande de glissement (22) sont réalisés dans au moins deux appareils séparés.

5. Dispositif de commande selon l'une quelconque des revendications précédentes, **caractérisé en ce que** le dispositif de limitation de glissement (20) ainsi que le dispositif de commande de glissement (22) sont réalisés dans une intégrité de sécurité différente.

6. Dispositif de commande selon l'une quelconque des revendications précédentes, **caractérisé en ce que** le signal de mode de fonctionnement (36) est réalisé comme un ou plusieurs signaux, dans lequel ceux-ci sont pneumatiques et/ou électriques binaires et/ou électroniques.

7. Dispositif de commande selon l'une quelconque des revendications précédentes, **caractérisé en ce qu'**un signal de glissement permis au maximum (28) est réalisé comme au moins un signal électrique binaire et/ou comme au moins un signal électronique.

8. Procédé de commande pour un dispositif de commande (14) d'un système antiglissement (10) d'un véhicule ferroviaire, dans lequel le système antiglissement (10) présente au moins un dispositif actionneur (18) pour le réglage d'une force de freinage d'un dispositif de freinage (12) au moins une roue et au moins un dispositif capteur (16) pour la détection d'au moins une grandeur d'état (24, 26) avec les étapes suivantes : la détection d'un signal de mode de fonctionnement (36) ; le réglage, sur la base du signal de mode de fonctionnement (36), d'une boucle de freinage d'urgence, d'au moins un premier ou second mode de fonctionnement; la définition, sur la base du mode de fonctionnement, de la plage de glissement prédéterminée sur un premier ou un second glissement (30a, 32a) ou une première ou seconde plage de glissement (30, 32) maximal ; la détermination d'un glissement ou d'une plage de glissement optimal, la sélection d'un minimum parmi un glissement maximal et optimal, la régulation d'une valeur de commande pour le dispositif actionneur (18) afin de régler le glissement dans une plage de glissement prédéterminée, dans lequel la première plage de glissement (30) est sélectionnée à l'aide des spécifications de la plage optimisée par l'usure et la course de freinage de plage ; et le second glissement (30a) ou la seconde plage de glissement (32) maximal est sélectionné de telle manière qu'une transmission de force disponible au maximum soit provoquée entre la roue et le rail, dans lequel le second glissement (30a) ou la seconde plage de glissement (32) maximal est un glissement ou une plage de glissement maximal déterminé au préalable et enregistré et utilisé alors par le dispositif de commande (14).

9. Procédé selon la revendication 8, dans lequel le second glissement (32a) ou la seconde plage de glissement (32) maximal dépend de plusieurs grandeurs et dépend par exemple du véhicule, de la vitesse et/ou de la force de frottement, et dans lequel le second glissement (32a) ou la seconde plage de glissement (32) maximal est déterminée de préférence par expérimentation et/ou simulation et/ou est enregistrée comme champ caractéristique dans le dispositif de commande (14).

10. Procédé selon la revendication 8 ou 9,
dans lequel éventuellement au moins une formule mathématique pour la détermination du second glissement (32a) maximal ou de la seconde plage de glissement (32) est enregistrée dans le dispositif de commande (14), et des valeurs correspondantes de variables qui sont nécessaires au calcul du second glissement (32a) maximal ou de la seconde plage de glissement (32), sont lues à partir des entrées correspondantes.
